# EUROPÄISCHE PATENTSCHRIFT

(11) **EP 1 119 241 B1**
(45) Veröffentlichungstag und Bekanntmachung des Hinweises auf die Patenterteilung: **12.12.2001**
(21) Anmeldenummer: 00917021.8
(22) Anmeldetag: 30.03.2000
(51) Int. Cl.: A01K 31/22, A01K 31/00, A01K 31/07, A01K 31/08, A01K 1/00

(54) **VERFAHRBARER GEFLÜGELSTALL**
MOBILE CHICKEN HUTCH
POULAILLER MOBILE

(30) Priorität: 01.04.1999 DE 19914900; 01.04.1999 DE 19914901
(43) Veröffentlichungstag der Anmeldung: 01.08.2001
(73) Patentinhaber: Weiland, Max, 37213 Witzenhausen (DE)
(72) Erfinder: WEILAND, Max, D-37213 Witzenhausen (DE); DEERBERG, Friedhelm, D-65205 Wiesbaden (DE)
(74) Vertreter: Schmidt, Horst, Dr.
(86) Internationale Anmeldenummer: EP0002835
(87) Internationale Veröffentlichungsnummer: WO0059296

(56) Entgegenhaltungen:
- DE-C- 511 342

## Beschreibung

Die Erfindung betrifft einen verfahrbaren Geflügelstall mit einem einen Scharrboden aufweisenden Basisstall stützenden Chassis mit Mitteln zur Fortbewegung auf einem Untergrund, und einem an wenigstens einer Seiten des Basisstalls vorgesehenen, schwenkbar miteinander verbundene Dach- und Seitenwände aufweisenden Seitenstall, so dass die Dach- und Seitenwände unter Verringerung der seitlichen Abmessungen des Geflügelstalls klappbar sind.

Um Geflügel, wie Hühner, in artgerechter Bodenhaltung unter Einhaltung der einschlägigen Tierschutzbedingungen zu halten, werden häufig speziell hierfür konzipierte Geflügelställe auf Weideflächen aufgestellt. Damit die Geflügelhaltung für den Landwirt gewinnbringend betrieben werden kann, sind diese Geflügelställe entsprechend gross zu dimensionieren. So hat beispielsweise ein Geflügelstall für die Aufnahme von 500 Hühnern eine Breite von ca. 6 m und eine Länge von etwa 10 m. Die Hühner halten sich zeitweise im Geflügelstall und zeitweise auf der Wiese auf, was zur Folge hat, dass der Bereich im Umkreis des Geflügelstalls mit Kot und anderen Verunreinigungen belastet und die Grasnarbe allmählich zerstört wird. Es werden daher Geflügelställe bevorzugt, die in gewissen zeitlichen Abständen von einem Ort auf einer Wiese zu einem anderen gefahren werden können. Ein Transport des Geflügelstalls über die Wiese hinaus ist im allgemeinen nicht möglich, weil die Breite der Geflügelställe die von der Strassenverkehrsordnung vorgeschriebenen Masse überschreitet. Es wurde deshalb schon vorgeschlagen (DE-C-511 342) einen verfahrbaren Geflügelstall derart auszubilden, dass er einen zentralen Basisstall und ein Paar Seitenställe aufweist. Letztere können bei Bedarf zur Verringerung der Querabmessungen des Geflügelstalls eingeklappt werden. Während der zentrale Basisstall einen ortsfesten Scharrboden hat, der jedoch nicht die bodenseitige untere Begrenzung des Basisstalls darstellt, kommt das Geflügel im Bereich der Seitenställe unmittelbar mit der Wiese bzw. dem Erdboden in Berührung. Die Seitenställe bieten daher in erster Linie nur einen Wetterschutz und eine Art Gehege, welches den Auslauf des Geflügels auf einen unbestimmten Bereich der Wiese einschränkt. Eine Aufweichung des Erdbodens bzw. der Wiese durch unterhalb der Seitenwände eingedrungenes Regenwassers hat deshalb zur Folge, dass das Geflügel Schlamm in den zentralen Basisstall einträgt. Dadurch verschmutzte Eier sind nur nach aufwendigen Reinigungsmassnahmen verkäuflich, was eine entsprechende Kostenerhöhung bedeutet. Ausserdem bedeutet das Vorsehen der Seitenställe grundsätzlich keine Erhöhung der Anzahl an Hühnern, die in einem fahrbaren Stall gehalten werden dürfen, da nur der zentrale Basistall bei der bekannten Anordnung als Aufenthalts-, Lege- und Schlafstelle für das Geflügel angesehen werden kann und nur dieser Bereich für die Berechnung, ob die zulässige Fläche pro Huhn eingehalten ist oder nicht, herangezogen werden kann.

Der Erfindung liegt die Aufgabe zugrunde, einen verfahrbaren Geflügelstall der eingangs erwähnten Gattung zu schaffen, der einerseits in seinen baulichen Abmessungen für den Fahrbetrieb so reduziert werden kann, dass eine Fortbewegung auch auf öffentlichen Fahrwegen möglich ist, und andererseits die Haltung einer grossen Stückzahl Geflügel in ähnlich wirtschaftlicher Weise wie bei ortsfesten Geflügelställen zulässt.

Diese Aufgabe wird erfindungsgemäss durch die Merkmale im kennzeichnenden Teil des Patentanspruchs gelöst. Danach umfasst eine die bodenseitige Begrenzung des Geflügelstalls bildende Scharrwanne, die vorzugsweise in einem Abstand vom Erdboden angeordnet ist, dass ein Huhn darunter keinen Platz hat, einen den Boden des Seitenstalls bildenden, bis zur betreffenden klappbaren Seitenwand reichenden Scharrwannenbereich, der von einer Scharr- in eine Fahrstellung bringbar ist. Der Geflügelstall kann aufgrund der Breite und Stabilität seines den Basisstall stützenden Chassis an eine Zugmaschine angehängt werden, um von einer Weidefläche zur anderen transportiert zu werden. Dabei können auch öffentliche Verkehrswege benutzt werden. Hierdurch ist u.a. auch eine Verleihung der Geflügelställe an andere Landwirte möglich. Beim Transport werden die Seiten- und Dachwände, die den Seitenstall bilden, an das Chassis angeklappt, und der den Seitenstall nach unten begrenzende Scharrwannenbereich wird entweder weggenommen oder in bevorzugter Weise, wie die Seiten- und Dachwände, an das Chassis angeklappt. Wenn erwünscht, kann das Zusammenklappen der Seiten- und Dachwände und des Scharrwannenbereichs durch einen zentralen Betätigungsmechanismus, z.B. in Gestalt eines Seilwindenmechanismus, ausgelöst werden. Im Betriebszustand steht durch den allseitig gegenüber der Aussenumgebung abgegrenzten Seitenstall ein für die Geflügelhaltung vollwertig verfügbarer Aufenthalts-, Lege- und Schlafplatz zur Verfügung, der die gewünschte hohe Belegungsdichte pro Stall ermöglicht. Der nach aussen als geschlossenes Gebilde anzusehende Geflügelstall ermöglicht die Einhaltung günstiger klimatischer Bedingungen, indem er nicht nur einen wirksamen Schutz gegen Niederschläge und Nässe sondern auch Kälte darstellt, da der Lebensraum des Geflügels, auch im Bereich des Seitenstalls, durch die allseitig vorhandene Scharrwanne gegenüber dem Erdboden abgeschirmt ist. Dennoch ermöglicht die Erfindung ohne weiteres die Freilandhaltung von Geflügel, indem dieses durch geeignete Auslauftüren in den Seitenwänden des Seitenstalls nach aussen treten kann. Es findet selbst bei Freilandhaltung keine Verschmutzung der Eier durch eingeschleppten Schlamm oder andere Verschmutzungen statt, da das Geflügel bei seinem Weg zu den Legenestern stets den Scharrwannenbereich des Seitenstalls passieren muss und dieser mit trockenen, scharrfähigem Gut ausgelegt werden kann. Dieser Bereich wird vom Geflügel auch bei Schlechtwetter bevorzugt aufgesucht. Ausserdem stellt die Erfindung einen wirksamen Schutz gegen Eindringen von Wildtieren, wie Marder oder Fuchs dar. Bei dem bekannten fahrbaren Geflügelstall können Bodenwellen Zutrittsöffnungen unterhalb der Seitenwände schaffen, durch die Wildtiere leicht ins Innere des Seitenstalls gelangen können. In besonders bevorzugter Weiterbildung der Erfindung ist eine Seitenstall mit der erfindungsgemässen Ausbildung an jeder Längsseite des Basisstalls vorgesehen. Ferner können mehere Geflügelstalleinheiten zu grösseren Anlagen miteinander gekoppelt werden.

Die Erfindung wird nachfolgend anhand von Ausführungsformen und der Zeichnung näher erläutert. Es zeigen:
- Fig. 1: in perspektivischer, auseinandergezogener Ansicht einen Geflügelstall gemäss einer Ausführungsform der Erfindung,
- Fig. 2: den Geflügelstall nach Fig. 1 in schematisierter Queransicht mit weggenommener Stirnwand,
- Fig. 3: in einer Ansicht ähnlich Fig. 2 einen Geflügelstall gemäss einer weiteren Ausführungsform der Erfindung, und
- Fig. 4: fragmentarische Ansichten des Seitenstalls der Ausführungsform der Erfindung nach Fig. 3 mit Darstellung des Seitenstalls in einer Klappzwischenstellung (links) und Fahrstellung (rechts).

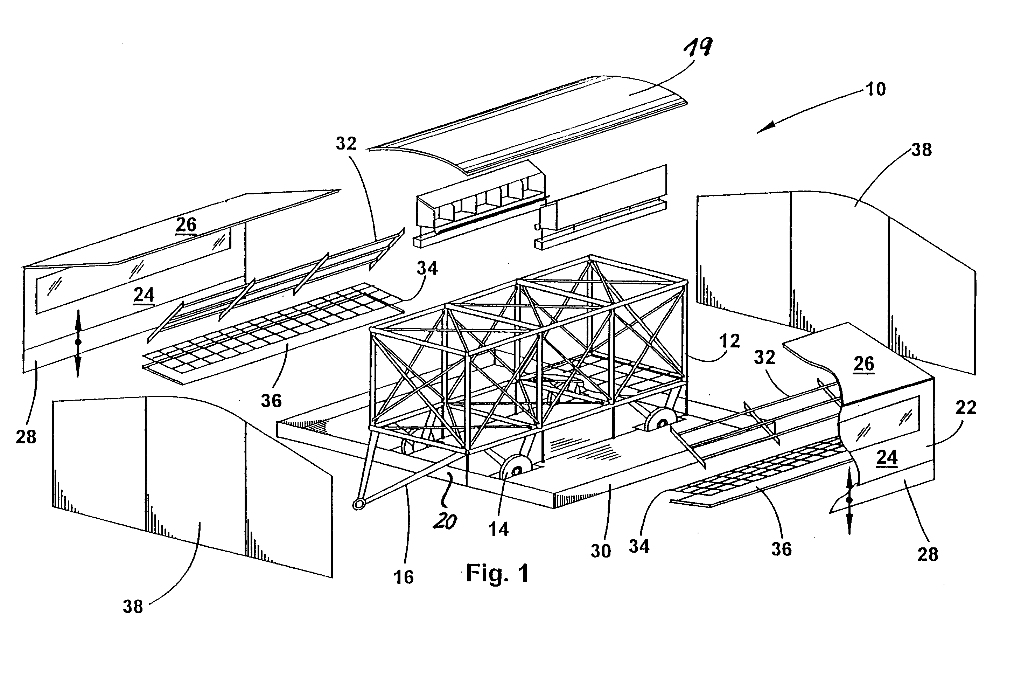

Der in Fig. 1 auseinandergezogen dargestellte, verfahrbare Geflügelstall, der das allgemeine Bezugszeichen 10 trägt, umfasst einen zentralen Basisstall 11, der von einem Chassis 12 in Gestalt eines Gitterrohrrahmen abgestützt ist, welches z.B. auf Rädern 14 steht. Stirnseitig kann am Chassis 12 eine als Deichsel ausgeführte Zugvorrichtung 16 angebracht sein. An den jeweiligen Stirnseiten des Chassis 12 sind Stirnwände 38 vorgesehen, deren über das Chassis 12 seitlich hinausstehende Bereiche um eine vertikale Achse geschwenkt werden können.

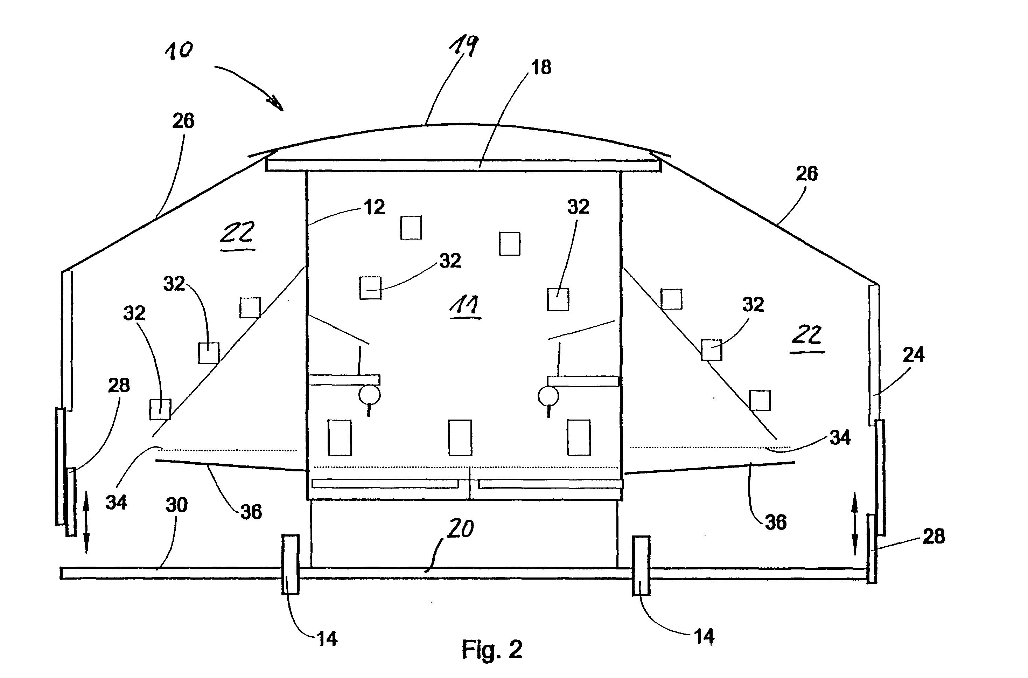

Auf dem Chassis 12 kann eine Deckenisolation 18, vgl. Fig. 2, angebracht sein, und beabstandet dazu ist eine leicht gekrümmte Wetterschutzhaube 19 montiert. An den Längsseiten des Chassis 12 sind ein Paar Seitenställe 22 vorgesehen, die jeweils eine Fensterseitenwand 24 und eine damit schwenkbar verbundene Dachwand 26 umfassen. Unterhalb jeder Fensterseitenwand 24 sind sowohl höhen-, als auch längsverschiebliche Auslauftüren 28 angebracht, mit denen der betreffende Seitenstall 22 von aussen zugänglich wird oder verschlossen werden kann.

Unter dem Chassis 12, in nahem Abstand vom Erdboden, ist eine Scharrwanne 20 vorgesehen, die seitliche abnehmbare Scharrwannenbereiche 30 umfasst. Die Scharrwanne 20 und die seitlichen Scharrwannenbereiche 30 überdecken die gesamte Grundrissfläche des Geflügelstalls 10. Vorzugsweise befinden sich die Scharrwanne 20 und die seitlichen Scharrwannenbereiche 30 auf einem Höhenniveau.

Sitzstangen 32, Laufroste 34 und Kotbretter 36 der Seitenställe 22 sind klappbar am Chassis 12 angebracht und können zum Transport des Geflügelstalles 10 eingeklappt werden.

In Fig. 2 ist der erfindungsgemässe Geflügelstall 10 schematisch im aufgeklappten Zustand dargestellt. In diesem Zustand kann er z.B. eine Breite von ca. 6 m haben, während er im eingeklappten Fahrzustand lediglich eine Breite von 3 m aufweisen kann. Nachdem die Sitzstange 32, das Laufrost 34 und Kotbretter 36 eingeklappt wurden, wird die Seitenwand 24 an die Dachwand 26 geklappt, wonach die Dachwand 26 zwischen die Deckenisolation 18 und die Wetterschutzhaube 19 eingeschoben wird. Danach hängt die Fensterseitenwand 24 eng am Chassis 12 anliegend vom Dach herunter, so dass der Stall 10 auf einer öffentlichen Strasse transportiert werden darf. Ausserdem werden noch die seitlichen Scharrwannenbereiche 30 entfernt, die aus Trapezblechen bestehen können und herausnehmbar an der Scharwanne 20 gehalten sind. Nachdem die Scharrwannenbereiche 30 seitlich herausgezogen wurden, können sie von Hand im Inneren des Chassis 12 abgelegt werden.

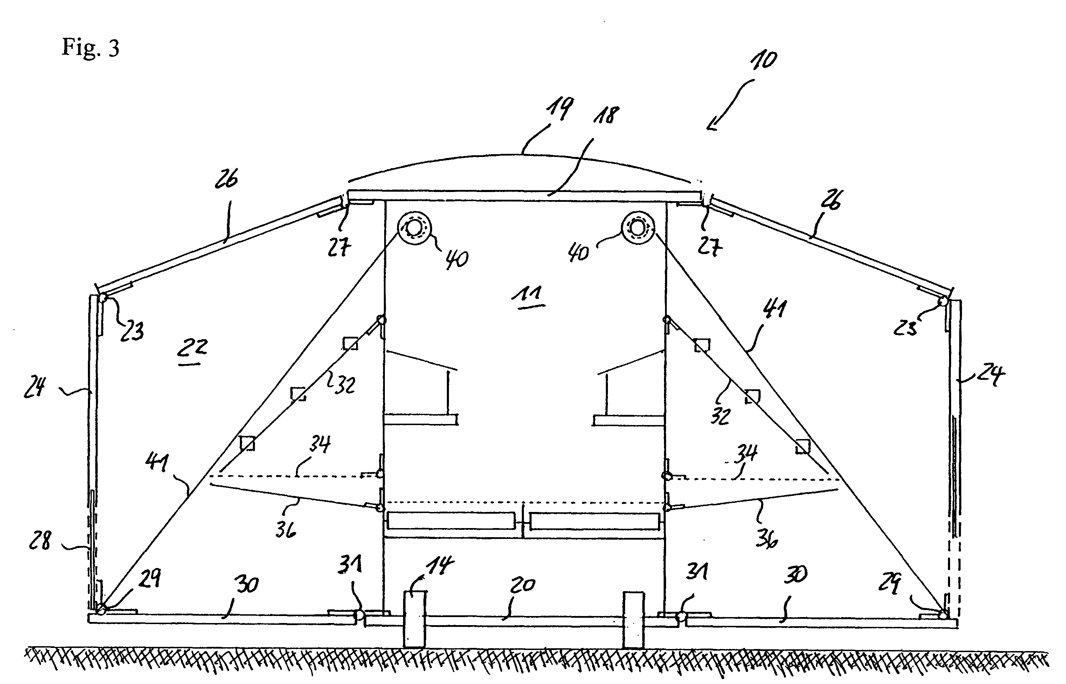

Fig. 3 zeigt eine modifizierte Ausführungsform, bei der gleiche Teile wie bei der vorbeschriebenen und in Fig. 1 und 2 gezeigten Ausführungsform die gleichen Bezugszeichen tragen. Eine erneute Beschreibung dieser Teile erübrigt sich deshalb. Im Unterschied zu der vorbeschriebenen Ausführungsform der Erfindung ist die Dachwand 26, mit der die Seitenwand 24, wie bei 23 angedeutet ist, schwenkbar über ein Gelenk verbunden ist, am Chassis 12 ebenfalls angelenkt, wie dies bei 27 gezeigt ist. Ferner ist der Scharrwannenbereich 30 gelenkig, wie bei 29 angedeutet ist, mit der Seitenwand 24 und andererseits, wie bei 31 angedeutet ist, gelenkig mit der zentralen Scharrwanne 20 verbunden.

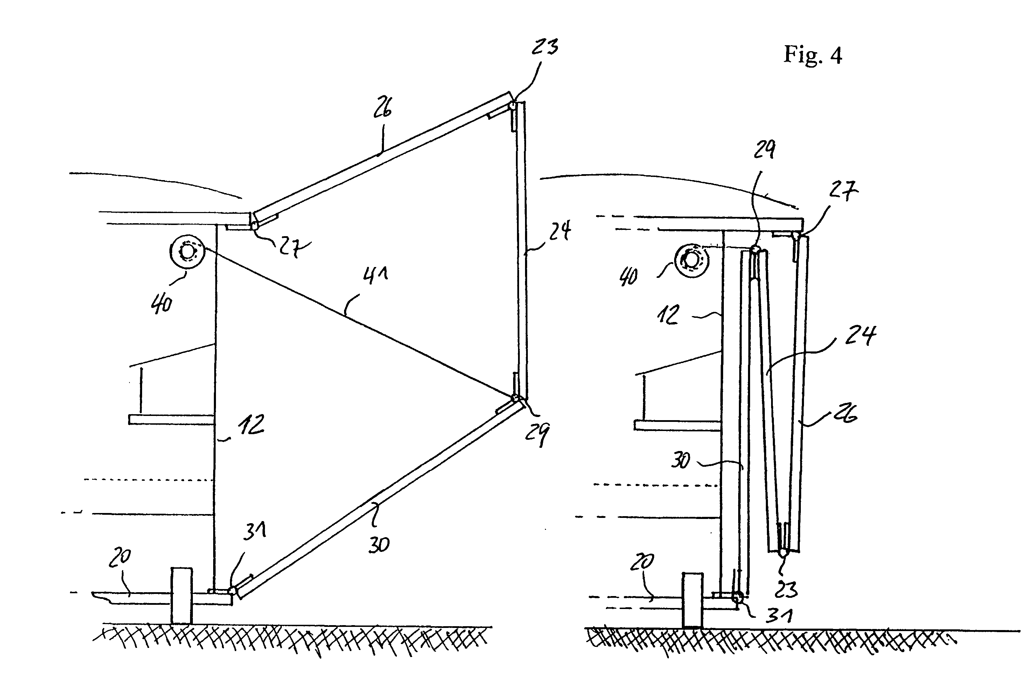

Am Chassis 12 ist ein das allgemeine Bezugszeichen 40 tragender Seilwindenmechanismus 40 vorgesehen, von dem sich ein Seil 41 zur Gelenkverbindung 29 zwischen der Seitenwand 24 und dem Scharrwannenbereich 30 erstreckt. Eine von Hand oder mittels eines Motors (nicht gezeigt) ausgeübte Drehkraft auf den Seilwindenmechanismus 40 bewirkt, dass der Scharrwannenbereich 30, nachdem die Sitzstange 32, das Laufrost 34 und Kotbrett 36 in der vorerwähnten Weise eingeklappt worden sind, gegen die Seitenfläche des Chassis 12 bzw. Basisstalls 11 geschwenkt werden kann. Im Zuge dieser Schwenkbewegung findet eine gegenseitige Verschwenkung der Seitenwand 24 und Dachwand 26 sowie der Dachwand 26 gegenüber dem Chassis 12 statt, wie dies in Fig. 4 angedeutet ist. In der Endstellung nehmen der Scharrwannenbereich 30, die Seitenwand 24 und die Dachwand 26 die in Fig. 4 auf der rechten Seite dargestellte Position ein, die der Fahrposition des Geflügelstalls 10 entspricht.

Es versteht sich, dass anstelle eines Seilwindenmechanismus auch eine andere geeignete hydraulische, pneumatische oder mechanische Einrichtung vorgesehen werden kann. Ferner könnte der Scharrwannenbereich 30 zwar schwenkbar mit der zentralen Scharrwanne 20 nicht jedoch auch mit der Seitenwand 24 verbunden sein. In diesem Fall würde der Seilwindenmechanismus 40 bewirken, dass nur der Scharrwannenbereich 30 gegen die Seitenfläche des Chassis 12 geschwenkt würde, während die Klappbewegung der Seiten- und Dachwände 24, 26 zur Erzielung der verringerten seitlichen Abmessungen des Geflügelstalls von Hand oder in anderer Weise vorgenommen werden müsste. Schliesslich könnte der Scharrwannenbereich 30 auch gelenkig nur mit der Seitenwand 24 verbunden sein, während eine ebensolche Verbindung mit der zentralen Scharrwanne 20 fehlt. Der Scharrwannenbereich 30 würde unter diesen Umständen gegen die Seitenwand 24 geklappt werden müssen, um die in Fig. 4, rechte Hälfte gezeigte Fahrposition des Geflügelstalls 10 zu erhalten. Obschon für die Fahrbarkeit des Geflügelstalls Räder auf einer oder zwei Achsen bevorzugt werden, könnten am Chassis 12 auch Gleitkufen vorgesehen sein. Auch könnte, wenn erwünscht, der Geflügelstall als eigengetriebene Einheit ausgebildet sein.

## Patentansprüche

1. Verfahrbarer Geflügelstall mit einem einen Scharrboden aufweisenden Basisstall (11) stützenden Chassis (12) mit Mitteln zur Fortbewegung auf einem Untergrund, und einem an wenigstens einer Seite des Basisstalls vorgesehenen, schwenkbar miteinander verbundene Dach- und Seitenwände (24,26) aufweisenden Seitenstall (22), so dass die Dach- und Seitenwände unter Verringerung der seitlichen Abmessungen des Geflügelstalls klappbar sind, **dadurch gekennzeichnet, dass** der Scharrboden als die bodenseitige Begrenzung im wesentlichen des gesamten Geflügelstalls bildende Scharrwanne (20) ausgebildet ist, von der ein die bodenseitige Begrenzung des Seitenstalls bildender, sich bis zur Seitenwand erstreckender Scharrwannenbereich (30) von einer Scharr- in eine die verringerten seitlichen Abmessungen des Geflügelstalls ermöglichende Fahrstellung bringbar ist.

2. Verfahrbarer Geflügelstall nach Anspruch 1, **dadurch gekennzeichnet, dass** der Scharrwannenbereich (30) mit der Seitenwand (24) schwenkbar verbunden ist.

3. Verfahrbarer Geflügelstall nach Anspruch 1, **dadurch gekennzeichnet, dass** der Scharrwannenbereich (30) mit dem Chassis (12) schwenkbar verbunden ist.

4. Verfahrbarer Geflügelstall nach Anspruch 1, **dadurch gekennzeichnet, dass** der Scharrwannenbereich (30) mit der Seitenwand (24) und dem Chassis (12) schwenkbar verbunden ist.

5. Verfahrbarer Geflügelstall nach einem der vorherghenden Ansprüche, **dadurch gekennzeichnet, dass** die Dachwand (26) schwenkbar mit dem Chassis (12) verbunden ist.

6. Verfahrbarer Geflügelstall nach Anspruch 5, **dadurch gekennzeichnet, dass** eine Betätigungseinrichtung (40) zur Bewegung der Seitenwand (24) und damit verknüpfter Wände zwischen einer Betriebs- und Fahrstellung vorgesehen ist.

7. Verfahrbarer Geflügelstall nach Anspruch 6, **dadurch gekennzeichnet, dass** die Betätigungseinrichtung als Seilwindenmechanismus (40) ausgebildet ist.

8. Verfahrbarer Geflügelstall nach Anspruch 1, **dadurch gekennzeichnet, dass** der Scharrwannenbereich (30) vom Chassis (12) abnehmbar ist.

9. Verfahrbarer Geflügelstall nach einem der vorherghenden Ansprüche, **gekennzeichnet durch** eine oder mehrere verschliessbare Auslauftüren (28) in der Seitenwand (24), die einen Auslauf des Geflügels aus dem Seitenstall (22) an die Aussenumgebung ermöglichen.

10. Verfahrbarer Geflügelstall nach einem der vorherghenden Ansprüche, **dadurch gekennzeichnet, dass** am Chassis (12) Halterungen für längs des Seitenstalls (22) sich erstreckender an das Chassis anklappbarer Sitzstangen (32) angelenkt sind.

11. Verfahrbarer Geflügelstall nach Anspruch 10, **dadurch gekennzeichnet, dass** unterhalb der Sitzstangen (32) ein Lauffrost (34) und/oder Kotbrett (36) am Chassis (12) angelenkt ist.

12. Verfahrbarer Geflügelstall nach einem der vorherghenden Ansprüche, **dadurch gekennzeichnet, dass** an den stirnseitigen Enden des Basis- und Seitenstalls (11,22) auf die verringerten seitlichen Abmessungen des Geflügelstalls klappbare Stirnwände (38) vorgesehen sind.

## Claims

1. A mobile poultry hutch including a chassis (12) supporting a basic hutch (11) having a scratching floor, and having means for moving the chassis over a ground, and a side hutch (22) provided on at least one side of said basic hutch and comprising roof and side walls (24, 26) pivotally connected with each other, so that the roof and side walls are foldable for reducing the lateral dimensions of the poultry hutch, **characterised in that** said scratching floor is foremd in the shape of a scratch pan (20) forming the bottom-side boundary of essentially the whole poultry hutch, a portion (30) of said scratch pan, forming the bottom-side boundary of said side hutch and extending up to said side wall, is adapted to be moved from a scratching position into a driving position for enabling said reduced lateral dimensions of the poultry hutch.

2. The mobile poultry hutch according to claim 1, **characterised in that** said scratch pan portion (30) is pivotally connected to said side wall (24).

3. The mobile poultry hutch according to claim 1, **characterised in that** said scratch pan portion (30) is pivotally connected to said chassis (12).

4. The mobile poultry hutch according to claim 1, **characterised in that** said scratch pan portion (30) is pivotally connected to said side wall (24) and said chassis (12).

5. The mobile poultry hutch according to one of the preceding claims, **characterised in that** said roof wall (26) is pivotally connected to said chassis (12).

6. The mobile poultry hutch according to claim 5, **characterised in that** an actuating means (40) is provided for moving said side wall (24) and walls connected thereto between an operating and a driving position.

7. The mobile poultry hutch according to claim 6, **characterised in that** said actuating means is formed of a rope winch mechanism (40).

8. The mobile poultry hutch according to claim 1, **characterised in that** said scratch pan portion (30) is detachable from said chassis (12).

9. The mobile poultry hutch according toone of the preceding claims, **characterised by** one or more lockable exit doors (28) provided in said side wall (24) for enabling the poultry to exit said side hutch side (22) towards the outer environment.

10. The mobile poultry hutch according to one of the preceding claims, **characterised in that** means for mounting perches (32) are hinged to the chassis (12), said perches extending along the side hutch (22) and being foldable onto the chassis.

11. The mobile poultry hutch according to claim 10, **characterised in that** a grid (34) and/or an excrement board (36) being hinged to the chassis (12) below said perches (32).

12. The mobile poultry hutch according to one of the preceding claims, **characterised in that** end walls (38) are provided at the end faces of said basic and side hutches (11, 2), said end walls are foldable into the reduced lateral dimensions of the poultry hutch.

## Revendications

1. Poulailler mobile comprenant un châssis (12) supportant un poulailler de base (11) présentant un fond de grattage avec un moyen pour le déplacement sur un sol et un poulailler latéral (22) prévu sur au moins un côté du poulailler de base, présentant des parois de toit et de côté (24, 26) reliées pivotantes entre elles de telle façon que les parois de toit et de côté puissent être rabattues en réduisant les dimensions latérales du poulailler, **caractérisé en ce que** le fond de grattage est conformé comme la cuvette de grattage (20) formant la délimitation du côté du fond essentiellement de tout le poulailler dont une zone de cuvette de grattage (30) formant la délimitation du côté du fond du poulailler latéral, s'étendant jusqu'à la paroi latérale peut être déplacée d'une position de grattage dans une position de déplacement permettant les dimensions latérales réduites du poulailler.

2. Poulailler mobile selon la revendication 1, **caractérisé en ce que** la zone de cuvette de grattage (30) est reliée de façon pivotante à la paroi latérale (24).

3. Poulailler mobile selon la revendication 1, **caractérisé en ce que** la zone de cuvette de grattage (30) est reliée de façon pivotante au châssis (12).

4. Poulailler mobile selon la revendication 1, **caractérisé en ce que** la zone de cuvette de grattage (30) est reliée de façon pivotante à la paroi latérale (24) et au châssis (12).

5. Poulailler mobile selon l'une quelconque des revendications précédentes, **caractérisé en ce que** la paroi de toit (26) est reliée de façon pivotante au châssis (12).

6. Poulailler mobile selon la revendication 5, **caractérisé en ce qu'**un système de commande (40) est prévu pour déplacer la paroi latérale (24) et ainsi les parois reliées entre une position de service et de déplacement.

7. Poulailler mobile selon la revendication 6, **caractérisé en ce que** le système de commande est sous la forme d'un mécanisme de palan à câble (40).

8. Poulailler mobile selon la revendication 1, **caractérisé en ce que** la zone de cuvette de grattage (30) peut être retirée du châssis (12).

9. Poulailler mobile selon l'une quelconque des revendications précédentes, **caractérisé par** une ou plusieurs portes de sortie (28) pouvant être fermées dans la paroi latérale (24), qui permettent une sortie de la volaille du poulailler latéral (22) dans l'environnement extérieur.

10. Poulailler mobile selon l'une quelconque des revendications précédentes, **caractérisé en ce que** des supports sont articulés sur le châssis (12) pour des barres d'appui (32) s'étendant de le long de l'écurie latérale (22) pouvant être rabattues contre le châssis.

11. Poulailler mobile selon la revendication 10, **caractérisé en ce qu'**une grille d'évolution et / ou une planche de déjection sont articulées sur le châssis (12) au-dessous des barres d'appui (32).

12. Poulailler mobile selon l'une quelconque des revendications précédentes, **caractérisé en ce que** des parois frontales pouvant être rabattues (38) sur les dimensions latérales réduites du poulailler sont prévues aux extrémités frontales du poulailler de base et latéral (11, 22).
